# EUROPÄISCHE PATENTSCHRIFT

(11) **EP 2 036 638 B1**
(45) Veröffentlichungstag und Bekanntmachung des Hinweises auf die Patenterteilung: **12.01.2011**
(21) Anmeldenummer: 08016105.2
(22) Anmeldetag: 12.09.2008
(51) Int. Cl.: B23B 29/034, B23C 1/02

(54) **Einrichtung zur Bearbeitung insbesondere großer Durchmesser eines Werkstücks**
Device for processing in particular large diameters of a workpiece
Dispositif de traitement en particulier de grands diamètres d'une pièce à usiner

(30) Priorität: 17.09.2007 DE 202007013125 U
(43) Veröffentlichungstag der Anmeldung: 18.03.2009
(73) Patentinhaber: StarragHeckert GmbH, 09117 Chemnitz (DE)
(72) Erfinder: Pönisch, Achim, Dipl.-Ing., 09573 Augustusburg (DE); Schlieder, Daniele, Dipl.-Ing. (FH), 09116 Chemnitz (DE)
(74) Vertreter: Rumrich, Gabriele

(56) Entgegenhaltungen:
- DE-A1- 2 904 405
- DE-C2- 3 941 783
- DE-U- 7 524 353
- GB-A- 2 232 101

## Beschreibung

Die Erfindung betrifft eine Einrichtung zur Bearbeitung insbesondere großer Durchmesser eines Werkstücks. Zur Bearbeitung großer Durchmesser sind z.B. Karusselldrehmaschinen bekannt (z.B. DE 29 04 405 C2). Nachteilig ist, dass mit derartigen Maschinen nur eine Seite eines liegenden Werkstücks bearbeitbar ist. Aus DE 39 41 783 C2 ist eine Maschine zum Zirkularfräsen runder Konturen bekannt, die einen radial auf den Durchmesser des Werkstücks einstellbaren Frässpindelträger oder mehrere Frässpindelträger aufweist, die über einen Zahnradantrieb und Planetenzahnräder antreibbar sind. Insbesondere sind zwei Fräser an waagerechten Spindeln befestigt. Die beiden Spindeln sind in einem Gleitstein gelagert, der radial verschiebbar in Radialführungen angeordnet ist, wodurch die Fräser auch während der Bearbeitung radial zueinander verstellbar sind und es somit möglich ist, auch unrunde Rohre zu bearbeiten. Dazu wird eine berührungslose Tastung vorgesehen. Diese Lösung ist konstruktiv aufwendig. Auch wird beim Zirkularfräsen das Werkzeug auf einer Helixbahn geführt. Problematisch sind dabei die Stellen der Bahn, an denen eine Achse ihre Richtung ändert (Quadrantenübergänge). Dadurch bleibt die Achse kurz stehen und weicht von der vorgegebenen Helixbahn ab, wodurch hohe Qualitätsanforderungen nicht erfüllt werden können. Weiterhin weisen bekannte Lösungen den Nachteil auf, dass keine sehr großen Durchmesserbereiche bearbeitbar sind. Das trifft auch auf die häufig eingesetzten Werkzeugmaschinen mit einer Planscheibe und einem an dieser angeordneten Planschieber zu.

Die GB 2 232 101 A (DE 39 18 118 A1) beschreibt eine als Plandrehkopf ausgebildete Planscheibe zur Bearbeitung planer Flächen. Der Plandrehkopf ist an einer Werkzeugspindel befestigbar ist und mit dieser um eine Drehachse antreibbar. Der Plandrehkopf ist mit zwei Schiebern ausgestattet, die in einer Radialebene nebeneinander liegend angeordnet sind und bei einer Werkzeugverstellung zum Wuchtausgleich gleichzeitig und gegensinnig zueinander radial nach außen und innen bewegt werden. Die Schieber sind als zwei parallele Verbindungslenker (Koppeln) zwischen zwei doppelarmigen Kurbeln eines Parallelkurbelgetriebes ausgebildet. Bei einer Werkzeugverstellung beschreiben daher die Schieber einen Teil einer kreisförmigen Bahn, während sie ihre parallele Lage zueinander behalten.

Die Bewegung der Schieber ist nur in einem eingeschränkten Maß möglich und voneinander abhängig möglich. Eine Bearbeitung von Außen- und Innendurchmessern kann mit dieser Lösung nicht durchgeführt werden.

Aus der Druckschrift DE 21 58 717 A1 ist ein Werkzeugträger für ein umlaufendes, radial verstellbares Werkzeug zur Bearbeitung von Planfläche oder zur Innenbearbeitung von Bohrungen mit einem in radialer Richtung verschiebbaren Werkzeug bekannt, wobei das Auftreten von Unwuchten vermieden werden soll. Dazu wird lediglich ein radial verschiebbarer Schlitten der das Werkzeug trägt kombiniert mit mindestens einem ein Gegengewicht tragenden Hilfsschlitten, der keine Bearbeitungsoperationen übernimmt und mit dem die Unwuchten ausgeglichen werden. Nachteilig ist, dass der Schlitten der das Werkzeug trägt lediglich innerhalb des Werkzeugträgers um eine geringe Strecke verschoben und damit das Werkzeug nur um die geringe Strecke angestellt werden kann, wodurch nur ein kleiner Durchmesserbereich bearbeitbar und eine Bearbeitung von Außendurchmessern nicht möglich ist.

Aufgabe der Erfindung ist es, eine Einrichtung zur Bearbeitung insbesondere großer Durchmesser eines Werkstücks zu entwickeln, die flexibel einsetzbar ist, einen einfachen konstruktiven Aufbau aufweist, eine hohe Qualität der bearbeiteten Oberfläche gewährleistet und bevorzugt in einem Waagerecht-Bearbeitungszentrum einsetzbar ist.

Diese Aufgabe wird mit den Merkmalen des ersten Patentanspruchs gelöst. Vorteilhafte Ausgestaltungen ergeben sich aus den Unteransprüchen.

Die Einrichtung zur Bearbeitung insbesondere großer Durchmesser eines Werkstücks weist eine um eine Drehachse antreibbare Planscheibe auf, die in Richtung der Drehachse linear bewegbar ist, wobei an der Planscheibe wenigstens ein senkrecht zur Drehachse radial nach außen und innen verschiebbarer erster Planschlitten angeordnet ist, an der Planscheibe ein zweiter Planschlitten senkrecht zur Drehachse radial nach außen und innen verschiebbar ist und am ersten Planschlitten ein zur Bearbeitung einer Innen- und/oder Außenkontur des Werkstücks geeignetes erstes Werkzeug und/oder ein zur Bearbeitung einer Innen- und/oder Außenkontur des Werkstücks geeignetes zweites Werkzeug und am zweiten Planschlitten ein zur Bearbeitung einer Innen- und/oder Außenkontur des Werkstücks geeignetes drittes Werkzeug und/oder ein zur Bearbeitung einer Innen- und/oder Außenkontur des Werkstücks geeignetes viertes Werkzeug aufgenommen sind.

Beide Planschlitten sind insbesondere parallel und zueinander entgegengesetzt radial verstellbar gelagert.

Insbesondere sind das erste und/oder zweite Werkzeug bzw. das dritte und/oder vierte Werkzeug in Form eines Drehmeißels ausgebildet, so dass eine Drehbearbeitung der Außenkontur und/oder der Innenkontur eines Werkstückes erfolgen kann.

Das erste und/oder zweite und/oder dritte und/oder vierte Werkzeug sind bevorzugt so befestigt, dass eine gedachte Verbindungslinie zwischen dem ersten und dritten Werkzeug durch die Drehachse bzw. eine gedachte Verbindungslinie zwischen dem zweiten und vierten Werkzeug durch die Drehachse führt. Die Werkzeuge sind somit in einer senkrechten Linie zur Drehachse angeordnet, wodurch deren einfache radiale Verstellung entsprechend dem zu bearbeitenden Durchmesser möglich ist und eine Verstellung in Abhängigkeit von einer Winkelfunktion entfallen kann.

Dazu weisen der erste Planschlitten und der zweite Planschlitten einen zueinander parallelen Führungsbereich auf, wobei vom Führungsbereich des ersten Planschlittens in Richtung zum zweiten Planschlitten ein abgewinkelter Arm reicht, an dem das erste und/oder zweite Werkzeug aufgenommen ist/sind. Weiterhin reicht vom Führungsbereich des zweiten Planschlittens in Richtung zum ersten Planschlitten ein abgewinkelter Arm, an dem das dritte und/oder vierte Werkzeug befestigt ist/sind. Bevorzugt sind das erste und das dritte Werkzeug radial außen und das zweite und das vierte Werkzeug radial innen befestigbar.

Die Planscheibe weist einen mittigen Durchbruch auf, in dem ein Querschieber mit seiner Arbeitsspindel in der W-Achse linear bewegbar aufgenommen ist.
Die U-Achsen der beiden Planschlitten liegen dabei außerhalb der Drehachse der Planscheibe und außerhalb des Querschiebers, so dass ein großer Verstellweg gewährleistet ist.

Zur Bestimmung des Durchmessers und/oder der Durchmessermitte des Werkstücks weist die Einrichtung bzw. der Querschieber eine entsprechende Messeinrichtung auf bzw. ist eine Messeinrichtung einwechselbar.

Bevorzugt ist die Einrichtung an einem Ständer eines Waagerecht-Bearbeitungszentrums in einer Y-Achse vertikal verschiebbar angeordnet, wobei die Rotationsachse horizontal und parallel zu einer Z-Achse eines Z-Bettes ausgerichtet und mit dem Ständer entlang der Z-Achse auf dem Z-Bett verschiebbar ist.

Die Arbeitsspindel des Waagerecht-Bearbeitungszentrums ragt mit ihrem Querschieber durch die Planscheibe, wobei die Achse der Arbeitsspindel in der W-Achse der Panscheibe liegt.
Vorteilhafter Weise besitzen die Planscheibe und die Arbeitsspindel separate Antriebe. Weiterhin ist die Arbeitsspindel in der Planscheibe relativ zu dieser entlang der W-Achse bewegbar. Dadurch kann die Arbeitsspindel für eine Fräsbearbeitung des Werkstücks bis über die Planscheibe in Richtung zum Werkstück bewegt werden, wobei die Fräsbearbeitung vorzugsweise bei stehender Planscheibe erfolgt. In einer bevorzugten Ausführung der Erfindung sind die am ersten und/oder zweiten Planschieber befestigten Werkzeuge gemeinsam mit an der Arbeitsspindel aufgenommenen Fräswerkzeugen mittels eines automatischen Werkzeugwechslers wechselbar, wodurch der Werkzeugwechsel sehr effektiv gestaltet werden kann.

Durch die Verwendung von zwei parallel zueinander angeordneten Planschlitten, die außerhalb der W-Achse in U-Achsen verstellbar sind, kann ein sehr großer Durchmesserbereich (z.B. 400 bis 2800 mm) bearbeitet werden. Eine Verstellbarkeit der Schlitten während der Bearbeitung ermöglicht die Bearbeitung unrunder Konturen.
Mit an den abgewinkelten Armen der Planschlitten radial außen angeordneten ersten und dritten Werkzeugen (Drehmeißeln) werden je nach Ausbildung und Einspannung der Werkzeuge (ggf. Umspannen der Werkzeuge) Außen- oder Innenkonturen bearbeitet. Mit radial innen an den Armen angeordneten zweiten und vierten Werkzeugen (Drehmeißeln) ist ebenfalls die Bearbeitung der Außenkontur und mit einem umgespannten Werkzeug bzw. einem entsprechend ausgebildeten Werkzeug die Bearbeitung der Innenkontur eines Werkstückes möglich. Dabei können die Werkzeuge zur Gewährleistung entsprechender Bearbeitungslängen entsprechend lange Schäfte aufweisen.
Neben der Möglichkeit der Bearbeitung eines großen Durchmesserbereiches können durch die lineare Verstellbarkeit der Einrichtung entlang der Z-Achse mittels des Ständers, ggf. in Verbindung mit Werkzeugen, die einen langen Schaft aufweisen, auch lange Innen- und Außendurchmesser bearbeitet werden.
Mit der erfindungsgemäßen Einrichtung wird insgesamt eine einfache und flexible Möglichkeit zur Bearbeitung von gekrümmten Außen- und Innenkonturen in hoher Qualität geschaffen.

Die Erfindung wird nachfolgend anhand eines Ausführungsbeispiels und zugehörigen Zeichnungen näher erläutert.

Es zeigen:
- Fig. 1:: dreidimensionale Darstellung der erfindungsgemäßen Einrichtung in Ausgangsstellung mit radial innen stehenden Planschlitten,
- Fig. 2:: dreidimensionale Darstellung der Einrichtung mit radial in eine äußere Endstellung ausgefahrenen Planschlitten,
- Fig. 3:: Waagerecht-Bearbeitungszentrum mit einer Einrichtung, die an dem Ständer des Waagerecht-Bearbeitungszentrums angeordnet ist,
- Fig. 4:: Seitenansicht eines Bearbeitungszentrums mit einer Einrichtung zur Bearbeitung eines großen Innendurchmessers,
- Fig. 5:: Seitenansicht eines Bearbeitungszentrums mit einer Einrichtung zur Bearbeitung eines kleinen Innendurchmessers,
- Fig. 6:: Seitenansicht eines Bearbeitungszentrums mit einer Einrichtung zur Bearbeitung eines Außendurchmessers.

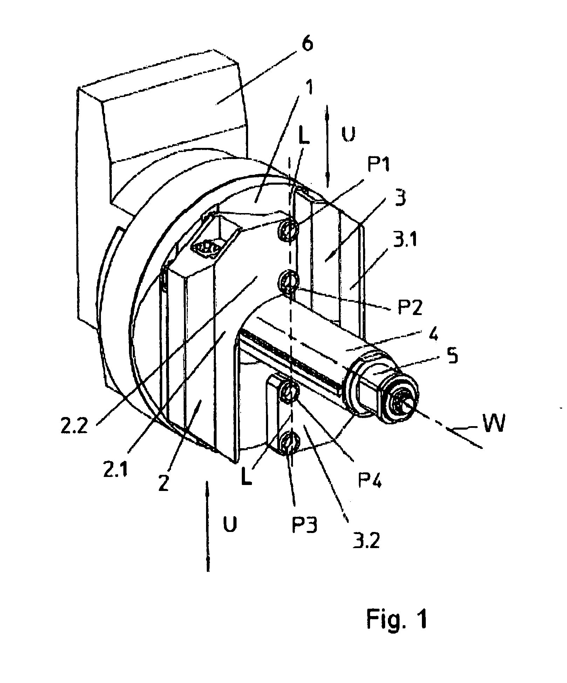

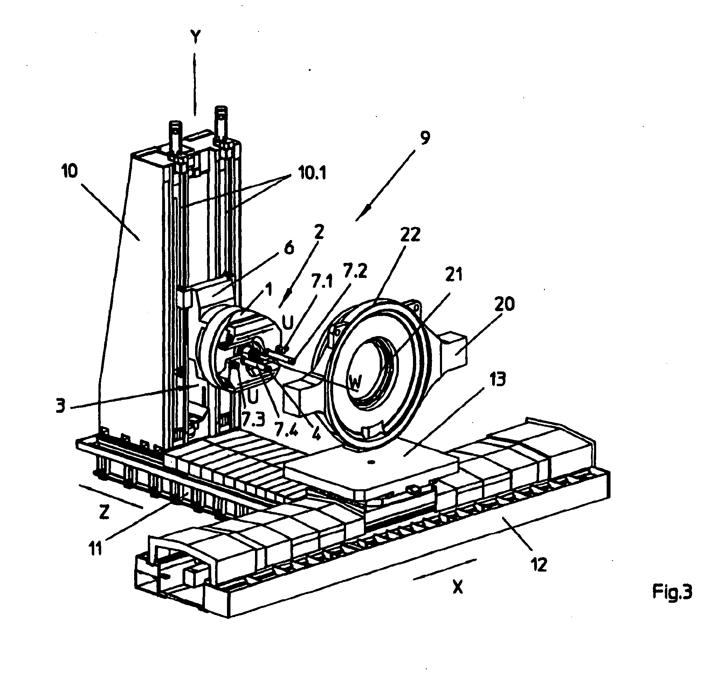

In Fig. 1 wird eine erfindungsgemäße Einrichtung mit einer Planscheibe 1, an welcher ein erster Planschlitten 2 und ein zweiter Planschlitten 3 angeordnet sind, die sich in einer radial nach innen gefahrenen Endposition befinden, dargestellt. Die lineare und zueinander parallele Verstellbarkeit der Planschlitten 2 und 3 in Längsachsen U wird über nicht dargestellte Linearführungen realisiert. Die Planscheibe 1 ist um eine Drehachse W drehbar und mittels eines Ständers (s. Fig. 3) entlang einer Z-Achse Z, zu der die Drehachse W parallel verläuft, linear verschiebbar. Durch die Planscheibe 1 und den Querschieber 4 ragt die Arbeitsspindel 5 eines in Fig. 1 nicht näher dargestellten Waagerecht-Bearbeitungszentrums. Die Befestigung der Planscheibe 1 erfolgt mittels eines Führungsteils 6.
Der erste Planschlitten 2 weist einen Führungsbereich 2.1 auf, von dem ein abgewinkelter Arm 2.2 in Richtung zum zweiten Planschlitten 3 reicht. An dem abgewinkelten Arm 2.2 sind radial außen eine erste Werkzeugaufnahme P1 für ein erstes Werkzeug und radial innen eine zweite Werkzeugaufnahme P2 für ein zweites Werkzeug vorgesehen. Spiegelbildlich zum ersten Planschlitten 2 ist der zweite Planschlitten 3 an der Planscheibe 1 mittels seines Führungsbereiches 3.1 gelagert. Der zweite Planschlitten 3 verfügt ebenfalls über einen in Richtung zum ersten Planschlitten 2 abgewinkelten Arm 3.2, an dem radial außen eine dritte Werkzeugaufnahme P3 für ein drittes Werkzeug und radial innen eine vierte Werkzeugaufnahme P4 für ein viertes Werkzeug vorgesehen sind. Verbindet man die Werkzeugaufnahmen P1 bis P4 mittels einer gedachten, hier gestrichelt dargestellten Linie L, so schneidet sich diese mit der Drehachse W. Obwohl die Längsachsen (U-Achsen) U außerhalb der Drehachse W liegen, ist somit sichergestellt, dass die Werkzeuge mit der Drehachse W fluchten und somit eine einfache Verstellung der Planschlitten 2 und 3 ohne Beachtung von Winkelfunktionen anhand des zu bearbeitenden Werkstückdurchmessers erfolgen kann.

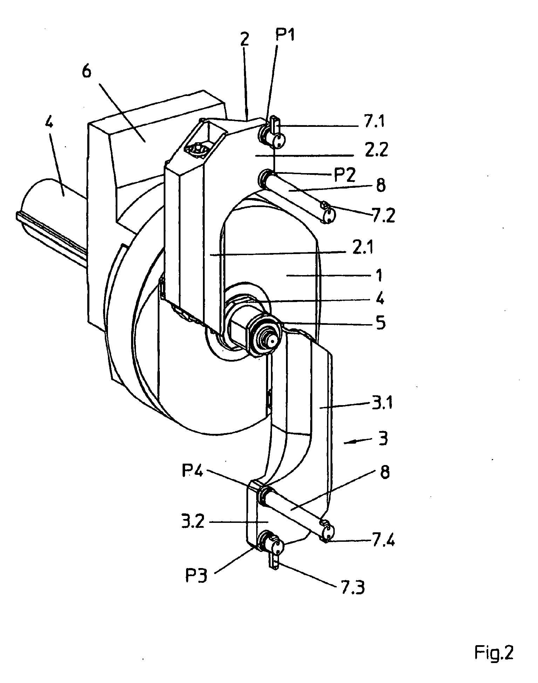

Fig. 2 zeigt die dreidimensionale Darstellung der Einrichtung gem. Fig. 1, jedoch mit radial in eine äußere Endstellung ausgefahrenen ersten und zweiten Planschlitten 2, 3. Die Planschlitten 2, 3 wurden mittels ihrer Führungsbereiche 2.1, 3.1 zueinander entgegengesetzt und parallel entlang der U-Achsen U radial nach außen verfahren, so dass die Arme 2.2 und 3.2 über die Planscheibe 1 hinausragen. In der Werkzeugaufnahme P1 des ersten Planschlittens 2 ist ein erstes Werkzeug 7.1 zur Bearbeitung einer Innenkontur und in der Werkzeugaufnahme P2 ein zweites Werkzeug 7.2 zur Bearbeitung einer Außenkontur aufgespannt. Analog ist am zweiten Planschlitten 3 in der dritten Werkzeugaufnahme P3 ein drittes Werkzeug 7.3 zur Bearbeitung eines Innendurchmessers und in der vierten Werkzeugaufnahme P4 ein viertes Werkzeug 7.4 zur Bearbeitung eines Außendurchmessers aufgespannt. Die Werkzeuge 7.2 und 7.4 weisen dabei einen langen Schaft 8 auf, um eine Bearbeitung des Innendurchmessers zu gewährleisten.

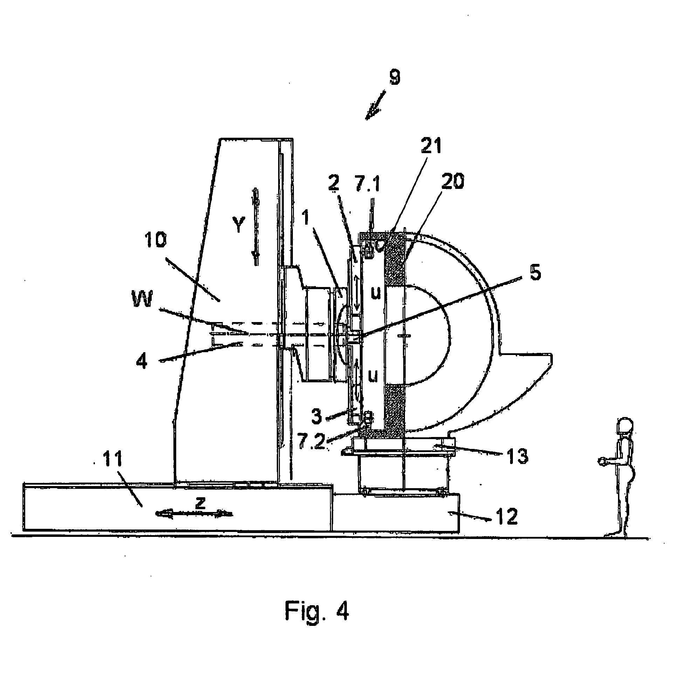

Fig. 3 zeigt in dreidimensionaler Ansicht ein Waagerecht-Bearbeitungszentrum 9 mit einer erfindungsgemäßen Einrichtung, die an dem Ständer 10 des Waagerecht-Bearbeitungszentrums 9 angeordnet ist, vor der Bearbeitung. Fig. 4 zeigt das Waagerecht-Bearbeitungszentrum 9 während der Bearbeitung in der Seitenansicht. Der Ständer 10 ist entlang einer Z-Achse Z auf dem Z-Bett 11 verfahrbar angeordnet. An dem Ständer 10 ist die erfindungsgemäße Einrichtung mittels des Führungsteils 6 an zwei Linearführungen 10.1 in einer Y-Achse Y vertikal verstellbar befestigt. An das Z-Bett 11 schließt sich ein quer dazu in einer X-Achse X ausgerichtetes X-Bett 12 an, auf welchem ein NC-Drehtisch 13 angeordnet ist, der ein Werkstück 20 aufnimmt, welches mittels nicht näher dargestellter Spannmittel auf dem NC-Drehtisch 13 aufgespannt ist.
Das Werkstück 20 weist eine Bohrung 21 auf, die mittels des am ersten Planschlitten 2 aufgespannten ersten Werkzeuges 7.1 und mittels des am zweiten Planschlitten 3 aufgespannten dritten Werkzeuges 7.3 ausgedreht werden soll. Dazu fährt der Ständer 10 entlang der Z-Achse Z auf dem Z-Bett 11 in Richtung zum Werkstück 20 (Fig. 3). Es erfolgt mit nicht dargestellten Messmitteln das Ausmessen der Bohrung 21, um die Bohrungsmitte zu bestimmen. Dann werden die Planscheibe 1 und/oder das Werkstück 20 derart zueinander ausgerichtet, dass die Drehachse W der Planscheibe 1 mit der Bohrungsmitte fluchtet. Nun wird die Planscheibe 1 in Rotation versetzt und mittels des Ständers 10 eine Vorschubbewegung vollführt, wodurch die Werkzeuge 7.1, 7.3 in die Bohrung 21 eintauchen und diese bearbeiten (Fig. 4). Da hier ein großer Durchmesser zu bearbeiten ist, befinden sich die Planschlitten 2, 3 im Wesentlichen in ihrer außen liegenden Endstellung.
Der Querschieber 4 ist in der Planscheibe 1 axial verschiebbar in der Drehachse W gelagert. Im Querschieber 4 sitzt die Arbeitsspindel 5. Der Querschieber 4 und die Arbeitsspindel 5 stehen in Richtung zum Werkstück 20 nicht über die Planschlitten 2, 3 hinaus.

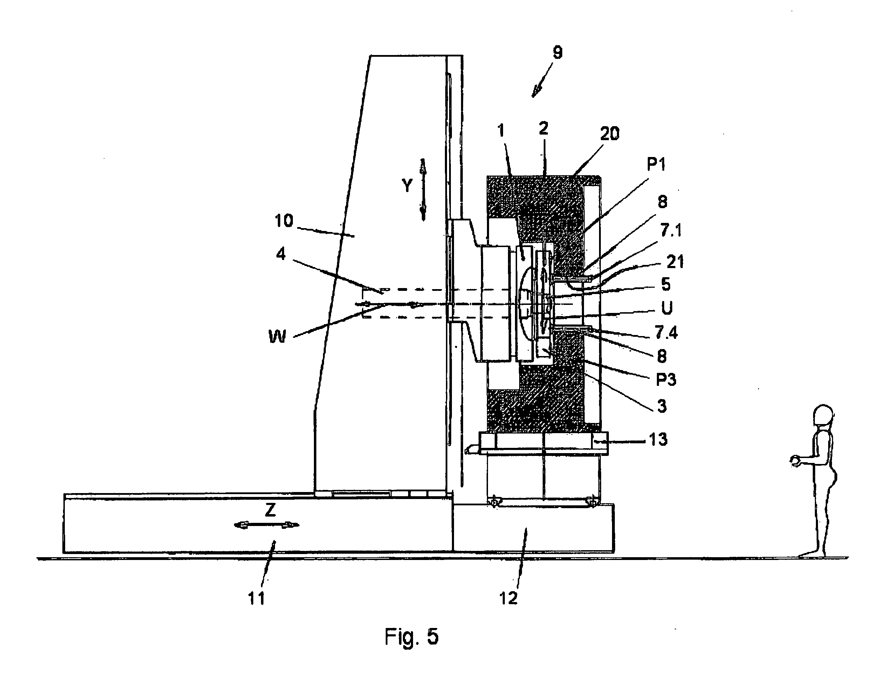

In Fig. 5 ist eine Seitenansicht des Bearbeitungszentrums 9 gem. Fig. 4, jedoch mit einer zur Bearbeitung eines kleinen Innendurchmessers ausgerüsteten Einrichtung, bei Abschluss der Bearbeitung dargestellt.
Die beiden Planschlitten 2 und 3 befinden sich hier im Wesentlichen in einer radial innen liegenden Position. Die äußeren Werkzeugaufnahmen P1 und P3 sind frei und nur die innen liegenden Werkzeugaufnahmen P2 und P4 mit einem zweiten Werkzeug 7.2 und einem vierten Werkzeug 7.4 bestückt, wobei die Werkzeuge 7.2, 7.4 zur Bearbeitung eines Innendurchmessers ausgebildet und ausgerichtet sind.
Die Länge des Schaftes 8 der Werkzeuge 7.2, 7.4 ist so dimensioniert, dass die Werkzeuge 7.2, 7.4 die gesamte Länge der Bohrung 21 des Werkstücks 20 bearbeiten können. Auch hier befinden sich Querschieber 4 und Arbeitsspindel 5 in einer Position, in der sie die Planschlitten 2, 3 nicht überragen.

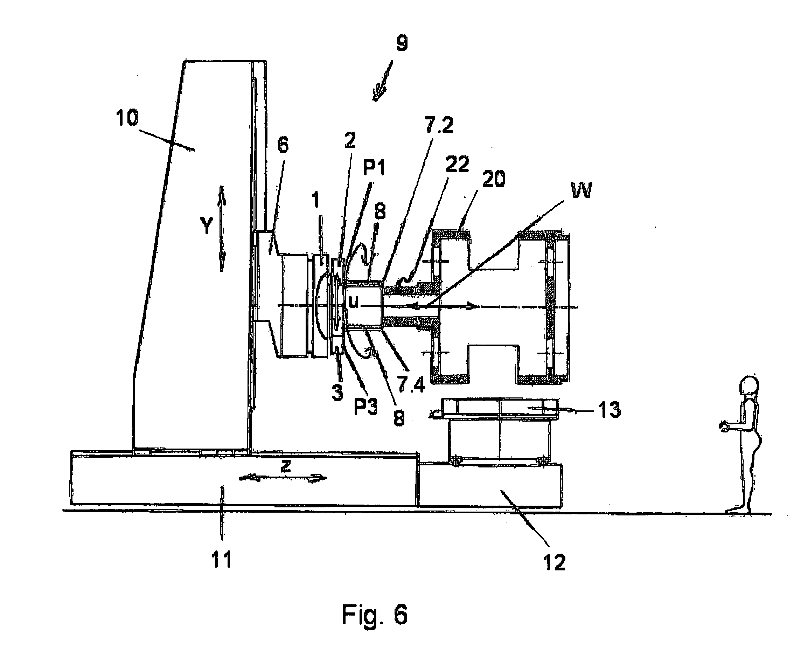

Fig. 6 zeigt die Seitenansicht des Bearbeitungszentrums 9 mit einer Einrichtung zur Bearbeitung eines relativ kleinen Außendurchmessers 22 eines Werkstückes 20. Auch hier sind wie in Fig. 5 nur die innen liegenden Werkzeugaufnahmen P2 und P4 mit einem zweiten Werkzeug 7.2 und einem vierten Werkzeug 7.4 bestückt, jedoch sind die Werkzeuge 7.2, 7.4 so ausgebildet und ausgerichtet, dass sie eine Bearbeitung des Außendurchmessers 22 gewährleisten. Auch hier weisen die Werkzeuge 7.2, 7.4 einen langen Schaft 8 auf, so dass die gesamte Durchmesserlänge bearbeitbar ist.
Gemäß eines nicht dargestellten Ausführungsbeispiels können auch die Werkzeugaufnahmen P1, P3 mit Werkzeugen zur Bearbeitung großer Außendurchmesser ausgerüstet sein. Weiterhin ist es auch möglich, Planflächen zu bearbeiten.

Ebenfalls nicht näher dargestellt ist die Möglichkeit, bevorzugt in Bearbeitungsrichtung zuerst ein Schruppwerkzeug (z.B. in Form des ersten oder zweiten Werkzeuges und nachfolgend ein Schlichtwerkzeug (in Form des dritten oder vierten Werkzeuges) vorzusehen, so dass erst ein Schruppen und dann ein Schlichten während eines Bearbeitungsvorganges erfolgt und somit eine qualitativ hochwertige gedrehte Oberfläche erzielt wird.

Durch die flexible Zustellbarkeit der Planschlitten 2, 3 während der Bearbeitung ist es möglich, unrunde Konturen sowie kegelförmige Außen- und Innenkonturen zu bearbeiten.

### Bezugszeichenliste

- 1: Planscheibe
- 2: erster Planschlitten
- 2.1: Führungsbereich des ersten Planschlittens
- 2.2: Arm des ersten Planschlittens
- 3: zweiter Planschlitten
- 3.1: Führungsbereich des zweiten Planschlittens
- 3.2: Arm des zweiten Planschlittens
- 4: Querschieber
- 5: Arbeitsspindel
- 6: Führungsteil
- 7.1: erstes Werkzeug
- 7.2: zweites Werkzeug
- 7.3: drittes Werkzeug
- 7.4: viertes Werkzeug
- 8: Schaft
- 9: Waagerecht-Bearbeitungszentrum
- 10: Ständer
- 11: Z-Bett
- 12: X-Bett
- 13: NC-Drehtisch
- 20: Werkstück
- 21: Bohrung
- 22: Außendurchmesser
- P1: erste Werkzeugaufnahme
- P2: zweite Werkzeugaufnahme
- P3: dritte Werkzeugaufnahme
- P4: vierte Werkzeugaufnahme
- L: gedachte Verbindungslinie
- U: U-Achse
- W: Drehachse
- X: X-Achse
- Y: Y-Achse
- Z: Z-Achse

## Patentansprüche

1. Einrichtung zur Bearbeitung insbesondere großer Durchmesser eines Werkstücks, wobei eine um eine Drehachse (W) antreibbare Planscheibe (1) entlang der Drehachse (W) linear bewegbar ist, und an der Planscheibe (1) wenigstens ein senkrecht zur Drehachse (W) radial nach außen und innen verschiebbarer erster Planschlitten (2) angeordnet ist, und an der Planscheibe (1) ein zweiter Planschlitten (3) senkrecht zur Drehachse (W) radial nach außen und innen verschiebbar ist, wobei am ersten Planschlitten (2) zur Bearbeitung einer Außen- und/oder Innenkontur des Werkstücks (20) ein erstes Werkzeug (7.1) und/oder ein zweites Werkzeug (7.2) und am zweiten Planschlitten (3) zur Bearbeitung einer Außen- und/oder Innenkontur des Werkstücks (20) ein drittes Werkzeug (7.3) und/oder ein viertes Werkzeug (7.4) angeordnet sind.

2. Einrichtung nach Anspruch 1, **dadurch gekennzeichnet, dass** der erste und der zweite Planschlitten (2, 3) parallel und zueinander entgegengesetzt radial verstellbar gelagert sind.

3. Einrichtung nach Anspruch 1 oder 2, **dadurch gekennzeichnet, dass** das erste Werkzeug (7.1) und/oder das zweite Werkzeug (7.2) in Form eines Drehmeißels ausgebildet ist/sind.

4. Einrichtung nach Anspruch 2 oder 3, **dadurch gekennzeichnet, dass** eine gedachte Verbindungslinie (L) zwischen dem ersten Werkzeug (7.1) und dem dritten Werkzeug (7.3) durch die Drehachse (W) führt.

5. Einrichtung nach einem der Ansprüche 2 bis 4, **dadurch gekennzeichnet, dass** eine gedachte Verbindungslinie (L) zwischen dem zweiten Werkzeug (7.2) und dem vierten Werkzeug (7.4) durch die Drehachse (W) führt.

6. Einrichtung nach einem der Ansprüche 1 bis 5, **dadurch gekennzeichnet, dass** der erste Planschlitten (2) und der zweite Planschlitten (3) zueinander parallel angeordnete Führungsbereiche (2.1, 3.1) aufweisen, und dass vom Führungsbereich (2.1) des ersten Planschlittens (2) in Richtung zum zweiten Planschlitten (3) ein abgewinkelter Arm (2.2) reicht, an dem das erste und/oder das zweite Werkzeug (7.1, 7.2) befestigt ist/sind, und dass vom Führungsbereich (3.1) des zweiten Planschlittens (3) in Richtung zum ersten Planschlitten (2) ein abgewinkelter Arm (3.2) reicht, an dem das dritte und/oder das vierte Werkzeug (7.3, 7.4) befestigt ist/sind.

7. Einrichtung nach einem der Ansprüche 1 bis 6, **dadurch gekennzeichnet, dass** ein Querschieber (4) innerhalb der Planscheibe (1) entlang der Drehachse (W) linear bewegbar ist.

8. Einrichtung nach einem der Ansprüche 1 bis 7, **dadurch gekennzeichnet, dass** sie eine Messeinrichtung zur Bestimmung des Durchmessers und/oder der Durchmessermitte des Werkstücks (20) aufweist.

9. Einrichtung nach einem der Ansprüche 1 bis 8, **dadurch gekennzeichnet, dass** sie an einem Ständer (10) eines Waagerecht-Bearbeitungszentrums (9) in einer Y-Achse (Y) vertikal verschiebbar angeordnet ist, wobei die Drehachse (W) horizontal und parallel zu einer Z-Achse (Z) eines Z-Bettes (11) ausgerichtet ist und mit dem Ständer (10) entlang der Z-Achse (Z) auf dem Z-Bett (11) verschiebbar ist.

10. Einrichtung nach einem der Ansprüche 1 bis 9, **dadurch gekennzeichnet, dass** eine Arbeitsspindel (5) des Waagerecht-Bearbeitungszentrums (9) durch den Querschieber (4) und die Planscheibe (1) ragt/reicht, wobei die Achse der Arbeitsspindel (5) in der Drehachse (W) der Planscheibe (1) liegt.

11. Einrichtung nach Anspruch 10, **dadurch gekennzeichnet, dass** die Planscheibe (1) und die Arbeitsspindel (5) separate Antriebe aufweisen.

12. Einrichtung nach Anspruch 10 oder 11, **dadurch gekennzeichnet, dass** die Arbeitsspindel (5) entlang der Drehachse (W) linear bewegbar ist

13. Einrichtung nach einem der Ansprüche 10 bis 12, **dadurch gekennzeichnet, dass** die Arbeitsspindel (5) zu einer Fräsbearbeitung des Werkstücks (20) bis über die Planscheibe (1) in Richtung zum Werkstück (20) bewegbar ist.

14. Einrichtung nach Anspruch 13, **dadurch gekennzeichnet, dass** die Fräsbearbeitung bei stehender Planscheibe (1) erfolgt.

15. Einrichtung nach einem der Ansprüche 1 bis 14, **dadurch gekennzeichnet, dass** der/die Planschlitten (2, 3) während der Drehbearbeitung radial verstellbar an der Planscheibe (1) angeordnet sind.

16. Einrichtung nach einem der Ansprüche 2 bis 15, **dadurch gekennzeichnet, dass** die U-Achsen der Planschlitten (2, 3) beidseitig zum Quer schieber (4) angeordnet sind und außerhalb der Drehachse (W) der Planscheibe (1) liegen.

## Claims

1. A device for processing in particular larger diameters of a workpiece, a faceplate (1), which is drivable around a rotational axis (W), being linearly movable along the rotational axis (W), and at least one first cross slide (2), which is displaceable radially outward and inward perpendicularly to the rotational axis (W), being situated on the faceplate (I), and a second cross slide (3) being displaceable radially outward and inward perpendicularly to the rotational axis (W) on the faceplate (1), a first tool (7.1) and/or a second tool (7.2) being situated on the first cross slide (2) for processing an outer and/or inner contour of the workpiece (20), and a third tool (7.3) and/or a fourth tool (7.4) being situated on the second cross slide (3) for processing an outer and/or inner contour of the workpiece (20).

2. The device according to Claim 1, **characterized in that** the first and the second cross slides (2, 3) are mounted so they are radially adjustable parallel and in opposite directions to one another.

3. The device according to Claim 1 or 2, **characterized in that** the first tool (7.1) and/or the second tool (7.2) is/are implemented in the form of a turning tool.

4. The device according to Claim 2 or 3, **characterized in that** an imaginary connection line (L) between the first tool (7.1) and the third tool (7.3) leads through the rotational axis (W).

5. The device according to one of Claims 2 to 4, **characterized in that** an imaginary connection line (L) between the second tool (7.2) and the fourth tool (7.4) leads through the rotational axis (W).

6. The device according to one of Claims 1 to 5, **characterized in that** the first cross slide (2) and the second cross slide (3) have guide areas (2.1, 3.1) situated parallel to one another, and an angled arm (2.2), on which the first and/or the second tool (7.1, 7.2) is/are fastened, extends from the guide area (2.1) of the first cross slide (2) in the direction toward the second cross slide (3), and an angled arm (3.2), on which the third and/or the fourth tool (7.3, 7.4) is/are fastened, extends from the guide area (3.1) of the second cross slide (3) in the direction toward the first cross slide (2).

7. The device according to one of Claims 1 to 6, **characterized in that** a transverse slide (4) is linearly movable within the faceplate (1) along the rotational axis (W).

8. The device according to one of Claims 1 to 7, **characterized in that** it has a measuring device for determining the diameter and/or the diametric center of the workpiece (20).

9. The device according to one of Claims 1 to 8, **characterized in that** it is situated so it is vertically displaceable on a column (10) of horizontal processing center (9) in a Y axis (Y), the rotational axis (W) being oriented horizontal and parallel to a Z axis (Z) of a Z bed (11) and being displaceable with the column (10) along the Z axis (Z) on the Z bed (11).

10. The device according to one of Claims I to 9, **characterized in that** a work spindle (5) of the horizontal processing center (9) extends through the transverse slide (4) and the faceplate (1), the axis of the work spindle (5) lying in the rotational axis (W) of the faceplate (1).

11. The device according to Claim 10, **characterized in that** the faceplate (1) and the work spindle (5) have separate drives.

12. The device according to Claim 10 or 11, **characterized in that** the work spindle (5) is linearly movable along the rotational axis (W).

13. The device according to one of Claims 10 to 12, **characterized in that** the work spindle (5) is movable to beyond the faceplate (1) in the direction toward the workpiece (20) for milling of the workpiece (20).

14. The device according to Claim 13, **characterized in that** the milling is performed with stationary faceplate (1).

15. The device according to one of Claims 1 to 14, **characterized in that** the cross slide(s) (2, 3) is/are situated so they are radially adjustable on the faceplate (1) during the turning.

16. The device according to one of Claims 2 to 15, **characterized in that** the U axes of the cross slides (2, 3) are situated on both sides of the transverse slide (4) and are outside the rotational axis (W) of the faceplate (1).

## Revendications

1. Dispositif pour l'usinage, en particulier de grand diamètre, d'une pièce, dans lequel un plateau circulaire (1) pouvant être entraîné autour d'un axe de rotation (W) peut être déplacé de façon linéaire le long de l'axe de rotation (W), et il est prévu disposé sur le plateau circulaire (1) au moins premier un chariot transversal (2) déplaçable dans le sens radial vers l'extérieur et l'intérieur perpendiculairement à l'axe de rotation (W), et un deuxième chariot transversal (3) peut être déplacé sur le plateau circulaire (1) dans le sens radial vers l'extérieur et l'intérieur perpendiculairement à l'axe de rotation (W), le premier chariot transversal (2) portant un premier outil (7.1) et/ou un deuxième outil (7.2) pour l'usinage d'un contour extérieur et/ou intérieur de la pièce (20) et le deuxième chariot transversal (3) un troisième outil (7.3) et/ou un quatrième outil (7.4) pour l'usinage d'un contour extérieur et/ou intérieur de la pièce (20).

2. Dispositif selon la revendication 1, **caractérisé en ce que** le premier chariot transversal et le deuxième (2, 3) sont supportés de façon mobile parallèlement l'un à l'autre et en sens opposé l'un de l'autre dans le sens radial.

3. Dispositif selon la revendication 1 ou 2, **caractérisé en ce que** le premier outil (7.1) et le deuxième outil (7.2) sont réalisés sous la forme d'un couteau de tournage.

4. Dispositif selon la revendication 2 ou 3, **caractérisé en ce qu'**une ligne imaginaire (L) reliant le premier outil (7.1) et le troisième outil (7.3) passe par l'axe de rotation (W).

5. Dispositif selon l'une des revendications 2 à 4, **caractérisé en ce qu'**une ligne imaginaire (L) reliant le deuxième outil (7.2) et le quatrième outil (7.4) passe par l'axe de rotation (W).

6. Dispositif selon l'une des revendications 1 à 5, **caractérisé en ce que** le premier chariot transversal (2) et le deuxième chariot transversal (3) présentent des zones de guidage (2.1, 3.1) parallèles l'une à l'autre et **en ce qu'**un bras coudé (2.2) partant de la zone de guidage (2.1) du premier chariot transversal (2) s'étend en direction du deuxième chariot transversal (3) et porte fixé le premier outil et/ou le deuxième (7.1, 7.2), et **en ce qu'**un bras coudé (3.2) s'étend à partir de la zone de guidage (3.1) du deuxième chariot transversal (3) en direction du premier chariot transversal (2) et porte fixé le troisième outil et/ou le quatrième (7.3, 7.4).

7. Dispositif selon l'une des revendications 1 à 6, **caractérisé en ce qu'**une coulisse transversale (4) est mobile de façon linéaire à l'intérieur du plateau circulaire (1) le long de l'axe de rotation (W).

8. Dispositif selon l'une des revendications 1 à 7, **caractérisé en ce qu'**il présente un dispositif de mesure pour la détermination du diamètre et/ou du centre du diamètre de la pièce (20).

9. Dispositif selon l'une des revendications 1 à 8, **caractérisé en ce qu'**il est disposé sur un support (10) d'un centre d'usinage horizontal (9) avec possibilité de translation verticale sur un axe Y (Y), l'axe de rotation (W) étant orienté horizontalement et parallèlement à un axe Z (Z) d'un socle sur Z (11) et pouvant être déplacé avec le support (10) le long de l'axe Z (Z) sur le socle sur Z (11).

10. Dispositif selon l'une des revendications 1 à 9, **caractérisé en ce qu'**une broche de travail (5) du centre d'usinage horizontal (9) dépasse/passe à travers la coulisse transversale (4) et le plateau circulaire (1), l'axe de la broche de travail (5) se trouvant dans l'axe de rotation (W) du plateau circulaire (1).

11. Dispositif selon la revendication 10, **caractérisé en ce que** le plateau circulaire (1) et la broche de travail (5) présentent des entraînements séparés.

12. Dispositif selon la revendication 10 ou 11, **caractérisé en ce que** la broche de travail (5) est mobile de façon linéaire le long de l'axe de rotation (W).

13. Dispositif selon l'une des revendications 10 à 12, **caractérisé en ce que** la broche de travail (5) est mobile par rapport à un usinage par fraisage de la pièce (20) en direction de la pièce (20) jusqu'au-delà du plateau circulaire (1).

14. Dispositif selon la revendication 13, **caractérisé en ce que** l'usinage par fraisage a lieu alors que le plateau circulaire (1) est immobile.

15. Dispositif selon l'une des revendications 1 à 14, **caractérisé en ce que** le ou les chariots transversaux (2, 3) sont disposés sur le plateau circulaire (1) de façon à être déplaçables dans le sens radial pendant le tournage.

16. Dispositif selon l'une des revendications 2 à 15, **caractérisé en ce que** les axes U des chariots transversaux (2, 3) sont disposés de part et d'autre de la coulisse transversale (4) et se trouvent en dehors de l'axe de rotation (W) du plateau circulaire (1).
